# EUROPÄISCHE PATENTSCHRIFT

(11) **EP 3 868 025 B1**
(45) Veröffentlichungstag und Bekanntmachung des Hinweises auf die Patenterteilung: **23.02.2022**
(21) Anmeldenummer: 20731017.8
(22) Anmeldetag: 02.06.2020
(51) Int. Cl.: H04B 1/00

(54) **SENDE-EMPFANGSVORRICHTUNG FÜR EIN KRAFTFAHRZEUG SOWIE KRAFTFAHRZEUG MIT EINER SOLCHEN SENDE-EMPFANGSVORRICHTUNG**
TRANSMITTING/RECEIVING DEVICE FOR A MOTOR VEHICLE AND MOTOR VEHICLE HAVING SUCH A TRANSMITTING/RECEIVING DEVICE
DISPOSITIF ÉMETTEUR-RÉCEPTEUR DESTINÉ À UN VÉHICULE AUTOMOBILE ET VÉHICULE AUTOMOBILE POURVU D'UN TEL DISPOSITIF ÉMETTEUR-RÉCEPTEUR

(30) Priorität: 06.06.2019 DE 102019208249
(43) Veröffentlichungstag der Anmeldung: 25.08.2021
(73) Patentinhaber: Audi AG, 85045 Ingolstadt (DE)
(72) Erfinder: EHRENTRAUT, Herbert, 92339 Beilngries (DE)
(86) Internationale Anmeldenummer: PCT/EP2020/065130
(87) Internationale Veröffentlichungsnummer: WO 2020/245075

(56) Entgegenhaltungen:
- US-A1- 2014 155 001
- US-A1- 2018 199 342
- US-B2- 9 784 831

## Beschreibung

Die Erfindung betrifft eine Sende-Empfangsvorrichtung für ein Kraftfahrzeug. Die Sende-Empfangsvorrichtung ist für die Bereitstellung einer Mobilfunkfunktionalität vorgesehen, das heißt mit ihr kann von einem Kraftfahrzeug aus eine Mobilfunkverbindung hin zu einem fahrzeugexternen Kommunikationspartner betrieben werden. Die Erfindung umfasst auch ein Kraftfahrzeug mit einer solchen Sende-Empfangsvorrichtung.

Eine Sende-Empfangsvorrichtung für die Mobilfunkfunktionalität eine Kraftfahrzeugs kann durch eine Zusammenschaltung folgender Komponenten realisiert sein: einer Antennenstruktur, einer mit der Antennenstruktur gekoppelten sogenannten HF-Frontendeinheit (HF - Hochfrequenz) und einer mit der HF-Frontendeinheit gekoppelten Recheneinrichtung, also beispielsweise einem digitalen Signalprozessor (DSP). Die Antennenstruktur dient zum Empfangen und Aussenden elektromagnetischer Wellen. Die HF-Frontendeinheit kann zum einen eine Verstärkung eines Mobilfunksignals im Hochfrequenzbereich, das heißt bei der Mittenfrequenz der elektromagnetischen Wellen, vorsehen. Zusätzlich oder alternativ dazu kann die HF-Frontendeinheit einen sogenannten Mischer (Englisch: Mixer) aufweisen, welcher das Mobilfunksignal zwischen dem Hochfrequenzbereich und dem sogenannten Basisband, einem in Bezug zum Hochfrequenzbereich niederfrequenteren Bereich, umwandeln kann. Eine andere Bezeichnung für HF-Frontendeinheit ist auch RF-Frontend (RF - Radio Frequency, Funkfrequenz). Im Basisbandbereich kann eine Signalverarbeitung durch die Recheneinrichtung durchgeführt werden, also beispielsweise für das Mobilfunksignal das Mobilfunkprotokoll bereitgestellt werden und/oder mittels eins Protokollstacks eine Verbindung zu einem Kommunikationspartner verwaltet werden. Über eine Mobilfunkverbindung, wie sie durch die Mobilfunkfunktionalität bereitgestellt werden kann, können Audiodaten für ein Telefongespräch und/oder Computer-Kommunikationsdaten für eine Internetverbindung und/oder eine Steuergerätekommunikation übertragen werden. Diese können durch die Recheneinrichtung in das Mobilfunksignal eingebettet beziehungsweise aus diesem extrahiert werden.

Zusätzlich zur Mobilfunkfunktionalität kann zusätzlich eine weitere Antennenstruktur mit nachgeschalteter HF-Frontendeinheit und daran angeschlossener Recheneinrichtung vorgesehen sein, um eine Radarfunktionalität in dem Kraftfahrzeug bereitzustellen. Mittels der Radarfunktionalität kann zumindest ein Objekt in der Umgebung des Kraftfahrzeugs geortet werden. Hierzu wird eine elektromagnetische Welle bei einer Radarfrequenz ausgesendet und ein an dem zumindest einen Objekt reflektiertes Echo der Welle empfangen.

Somit besteht in einem Kraftfahrzeug der Bedarf, mehrere Antennenstrukturen mit zugehöriger HF-Frontendeinheit und nachgeschalteter Recheneinrichtung unterzubringen oder anzuordnen.

Aus der DE 10 2006 023 206 A1 ist in diesem Zusammenhang ein Antennensystem mit kombinierter Antennenvorrichtung bekannt, die für zwei unterschiedliche Funkfunktionalitäten (GPS-Empfang und Kurzbereichskommunikation) in einem Gehäuse zwei unterschiedliche Antennen kompakt anordnen.

Aus der DE 10 2007 046 471 A1 ist bekannt, eine Antenne gekapselt auszugestalten und hierfür einen Antennenchip, ein Substrat und eine darauf angeordnete Antennenstruktur zu nutzen. Diese gekapselte Antenne kann für eine Radarfunktionalität genutzt werden. Es können hierbei Radarwellen mit unterschiedlichen Frequenzen erzeugt werden, indem zwischen den unterschiedlichen Frequenzbereichen umgeschaltet wird.

Aus der DE 10 2018 120 050 A1 ist bekannt, dass man eine Antennenstruktur als Antennenarray ausgestalten kann, um hierdurch eine veränderbare, einstellbare Abstrahlcharakteristik und Empfangscharakteristik der Antennenstruktur einzustellen. Es kann die Richtung der stärksten Abstrahlung und der größten Empfangssensitivität durch Konfigurieren des Antennenarrays eingestellt werden. Dies wird als Beamforming oder Ausrichten eines Hauptbeams (Hauptkeule) bezeichnet.

Aus der US 9 784 831 B2 ist ein Verfahren zur Objektdetektion in einer Fahrzeugumgebung mittels Radar (FMCW) bekannt, wobei für eine Stabilisierung oder Detektion zusätzliche Informationen aus der Umgebung empfangen und diese in einer Datenfusion mit dem Detektionsresultat des Radars kombiniert werden.

Aus der US 2018/0199342 A1 ist ein Verfahren zur Kombination von Datenpaketen bei einem gleichzeitigen Empfang von zwei Signalen in zwei unterschiedlichen Frequenzbereichen, insbesondere im Frequenzbereich von WLAN und Radar, bekannt. Für die Kombination der Datenpakete werden die Datenpakete des Radarsignals während der Sendelücken des WLAN-Signals zwischen die Datenpakete des WLAN-Signals geschoben, sobald mittels eines Channel Availability Checks eine Sendelücke im WLAN-Signal erkannt wird.

Aus der US2014/0155001 A1 ist ein RF-Frontend bekannt, welches Signale auf zumindest zwei unterschiedlichen Frequenzbändern, welche von einer Antennenvorrichtung empfangen werden, gleichzeitig übertragen kann.

Der Erfindung liegt die Aufgabe zugrunde, in einem Kraftfahrzeug die Komponenten für eine Mobilfunkfunktionalität und die Komponenten für eine Radarfunktionalität kompakt unterzubringen.

Die Aufgabe wird durch den Gegenstand des unabhängigen Patentanspruchs 1 gelöst, welcher eine Sende-Empfangsvorrichtung für ein Kraftfahrzeug beansprucht.

Vorteilhafte Ausführungsformen der Erfindung ergeben sich durch die abhängigen Patentansprüche, die folgende Beschreibung sowie die Figuren.

Durch die Erfindung ist eine Sende-Empfangsvorrichtung für ein Kraftfahrzeug bereitgestellt. In der an sich bekannten Weise weist die Sende-Empfangsvorrichtung für eine Mobilfunkfunktionalität als Komponenten auf:
- eine Antennenstruktur zum Erzeugen elektromagnetischer Wellen eines zu sendenden Mobilfunksignals und/oder zum Empfangen elektromagnetischer Wellen eines empfangenen Mobilfunksignals,
- eine mit der Antennenstruktur gekoppelte HF-Frontendeinheit, die dazu eingerichtet ist, das zu sendende Mobilfunksignal aufwärts zu mischen (also vom Basisband in den Frequenzbereich der elektromagnetischen Wellen) und/oder das empfangene Mobilfunksignal abwärts zu mischen (also vom Frequenzbereich der elektromagnetischen Wellen in das Basisband) und
- eine mit der HF-Frontendeinheit gekoppelte Recheneinrichtung, die dazu eingerichtet ist, zwischen dem jeweiligen Mobilfunksignal (also dem zu sendenden und/oder dem empfangenen Mobilfunksignal) einerseits und den in dem Mobilfunksignal enthaltenen oder übertragenen Kommunikationsdaten andererseits umzuwandeln oder abzubilden oder zu übertragen. Solche Kommunikationsdaten können in der besagten Weise beispielsweise Daten eines Mobilfunkprotokolls und/oder einer Verbindungsverwaltung und/oder Nutzdaten sein. Als Nutzdaten können beispielsweise Audiodaten (beispielsweise eines Telefongesprächs) und/oder Gerätekommunikationsdaten (beispielsweise Daten einer Internetverbindung und/oder einer Steuergerätekommunikation) vorgesehen sein.

Mit anderen Worten geht die Erfindung davon aus, dass in der Sende-Empfangsvorrichtung alle Komponenten zum Bereitstellen der Mobilfunkfunktionalität vorgesehen und auch für das Bereitstellen der Mobilfunkfunktionalität eingerichtet sind.

Um nun bauraumsparend auch eine Radarfunktionalität, das heißt eine Radarortung von Objekten in einer Umgebung des Kraftfahrzeugs, zu ermöglichen ist erfindungsgemäß vorgesehen, dass die Sende-Empfangsvorrichtung dazu eingerichtet ist, mittels einer oder einigen oder jeder der besagten Komponenten zusätzlich ein Radarsignal zu verarbeiten. Mit anderen Worten ist zumindest eine der besagten Komponenten in der Sende-Empfangsvorrichtung auch dazu eingerichtet oder vorgesehen, eine elektromagnetische Welle eines Radarsignals auszusenden und die an einem Objekt reflektierte Welle (Echo) wieder zu empfangen und aus dem Echo auf einen Ort und/oder eine Relativgeschwindigkeit des jeweiligen Objekts zu schließen oder diese aus dem Echo herzuleiten. Diese Radarfunktionalität ist an sich bekannt. Über die jeweilige Komponente wird also sowohl das Mobilfunksignal als auch das Radarsignal geführt.

Um erfindungsgemäß zumindest eine Komponente doppelt zu nutzen, also für die Mobilfunktionalität und die Radarfunktionalität, ist erfindungsgemäß vorgesehen, dass für das Radarsignal elektromagnetische Wellen mit Frequenzen vorgesehen sind, die sich von der Mittenfrequenz der elektromagnetischen Wellen des jeweiligen Mobilfunksignals (gesendetes und/oder empfangenes Mobilfunksignal) um weniger als den Faktor 5 unterscheiden. Mit anderen Worten ist die Radarfrequenz höchstens um den Faktor 5 höher als die Mittenfrequenz der elektromagnetischen Wellen des Mobilfunksignals oder umgekehrt die Radarfrequenz höchstens um den Faktor 5 kleiner (1/5) als die Mittenfrequenz der elektromagnetischen Wellen des jeweiligen Mobilfunksignals. Insbesondere beträgt der Unterschied weniger als den Faktor 3, bevorzugt weniger als den Faktor 2. Hierdurch ist es ermöglicht, zumindest eine der besagten Komponenten doppelt zu nutzen, da deren Bauteile in Bezug auf Abmessungen (bei der Antennenstruktur) und/oder Kennwerte (Frequenzgang/Übertragungsverhalten) für die Verarbeitung sowohl des Mobilfunksignals als auch des Radarsignals geeignet gewählt werden können. Bei einem größeren Unterschied der Frequenzen ist es dagegen in der Regel nicht möglich, eine Komponente zur Verarbeitung von Signalen beider Frequenzbereiche zu nutzen.

Erfindungsgemäß ist die Antennenstruktur als ein Antennenarray ausgestaltet, das heißt es gibt mehrere Teilantennen oder Subantennen, die ortsversetzt zueinander die elektromagnetische Welle zeitgleich abstrahlen. Hierbei kann für die einzelnen Subantennen ein Phasenversatz (Zeitverzögerung) vorgesehen werden. Die Signale der Subantennen können getrennt voneinander erzeugt und/oder empfangen werden oder alternativ dazu kann das Mobilfunksignal mittels einer analogen Antennenschaltung auf die Subantennen aufgeteilt werden beziehungsweise von den Subantennen empfangen und zu einem einzelnen Antennensignal kombiniert werden. Die besagte Recheneinrichtung ist dazu eingerichtet, mittels eines Beamforming eine jeweilige maximale Richtungssensitivität des Antennenarrays (die sogenannte Ausrichtung des Beams oder Hauptbeams) für die elektromagnetischen Wellen des Radarsignals einerseits und für die elektromagnetischen Wellen des jeweiligen Mobilfunksignals andererseits in unterschiedliche Richtungen auszurichten. Mit anderen Worten wird mittels des Antennenarrays für das Radarsignal eine andere Antennencharakteristik (Abstrahl- und/oder Empfangscharakteristik) eingestellt als für das jeweilige Mobilfunksignal. Hierdurch kann in vorteilhafter Weise für die Mobilfunkfunktionalität die jeweilige maximale Richtungssensitivität oder der sogenannte Hauptbeam (oder einfach Beam) oder die Hauptkeule hin zu einer Basisstation oder einem anderen Empfänger oder Sender ausgerichtet werden, und währenddessen für das Radarsignal der Hauptbeam oder die Hauptkeule hin zu Objekten in einer Umgebung des Kraftfahrzeugs ausgerichtet werden (beispielsweise auf andere Fahrzeuge), um diese zu orten.

Erfindungsgemäß ist die Recheneinrichtung dazu eingerichtet, durch senden und/oder empfangen des Mobilfunksignals mittels einer Ortungseinheit eine Hindernisortung für ein Nullsteering des Beamformings durchzuführen. Die Ortungseinheit kann beispielsweise als ein Programmmodul der Recheneinrichtung realisiert sein. Mittels des Nullsteering kann beim Beamforming die Richtung der geringsten Empfindlichkeit (Null) mittels des Antennenarrays ausgerichtet werden. Hierfür gibt es im Stand der Technik Algorithmen für eine Hindernisortung, die diejenige Richtung ermitteln, in welcher die größte Störung für das Mobilfunksignal angeordnet ist. Beispielsweise kann ein sogenanntes adaptives Filter iterativ die Richtung ermitteln. Algorithmen sind hierzu im Stand der Technik verfügbar. Nun stellt aber ein Hindernis für ein Mobilfunksignal zugleich ein Objekt in der Umgebung des Kraftfahrzeugs dar, das mittels des Radarsignals geortet werden sollte. Entsprechend kann also auch das Radarsignal mittels derselben Ortungseinheit verarbeitet werden, wobei lediglich eine inverse Verarbeitung dahingehend vorgesehen sein muss, dass ein Hindernis, das bei der Mobilfunkfunktionalität für ein Nullsteering des Beamformings vorgesehen ist, mittels derselben Ortungseinheit eine Objektortung anhand des Radarsignals vorsieht, das heißt durch Verarbeiten des Radarsignals werden beispielsweise mittels desselben adaptiven Filters iterativ diejenigen Raumrichtungen ermittelt, an denen sich ein Objekt befinden muss. So kann also ein Algorithmus für ein Nullsteering des Beamformings aus der Mobilfunkfunktionalität dafür genutzt werden, ein Radarsignal zu verarbeiten, um die erkannten Hindernisse als Objekte in der Umgebung des Kraftfahrzeugs kenntlich zu machen.

Durch die Erfindung ergibt sich der Vorteil, dass zum Bereitstellen der Radarfunktionalität zumindest eine der Komponenten der Mobilfunkfunktionalität doppelt genutzt wird und hierdurch diese Komponente nicht doppelt bereitgestellt sein muss.

Um die Erfindung zu realisieren, kann beispielsweise vorgesehen sein, dass die Mittenfrequenz der elektromagnetischen Wellen in einem Frequenzbereich von 25 Gigahertz bis 75 Gigahertz liegt. Die Frequenz für die elektromagnetischen Wellen des Radarsignals kann in einem Frequenzbereich von 20 Gigahertz bis 90 Gigahertz liegen. Es kann aber auch vorgesehen sein, dass die Mittenfrequenz für die elektromagnetische Welle des Mobilfunksignals in einem Bereich von 3 Gigahertz bis 10 Gigahertz liegt und das Radarsignal mit einer Frequenz kleiner als 50 Gigahertz erzeugt wird.

Eine HF-Frontendeinheit wird auch als RF-Frontend (RF - Radio Frequency) bezeichnet. Eine HF-Frontendeinheit kann insbesondere einen Bandpassfilter zum Tunen auf eine Mittenfrequenz der elektromagnetischen Wellen aufweisen und/oder einen Verstärker (genannt LNA - Low Noise Amplifier) und/oder einen Mischer mit Oszillator (LO - Local Oscillator). Ein Beispiel für eine empfangsfähige HF-Frontendeinheit ist ein Superheterodynempfänger.

Mittels der Mobilfunkfunktionalität kann eine Mobilfunkapplikation des Kraftfahrzeugs unterstützt werden, beispielswiese eine Freisprechtelefonie. Mittels der Radarfunktionalität kann eine Radarapplikation des Kraftfahrzeugs unterstützt werden, beispielswiese eine Umgebungsüberwachung.

Die Erfindung umfasst auch Ausführungsformen, durch die sich zusätzliche Vorteile ergeben.

In einer Ausführungsform wird als eine gemeinsame Komponente die Antennenstruktur genutzt. Die Antennenstruktur ist dazu eingerichtet, die elektromagnetischen Wellen des Radarsignals einerseits und die elektromagnetischen Wellen des jeweiligen Mobilfunksignals andererseits mit unterschiedlichen Polaritäten und/oder Frequenzen zu erzeugen und/oder zu empfangen. Beispielsweise kann also unterschieden werden zwischen horizontal polarisierten Wellen und vertikal polarisierten Wellen. Zusätzlich oder alternativ kann eine Unterscheidung oder Trennung nach Frequenzen vorgesehen sein. Hierdurch ergibt sich der Vorteil, dass das Radarsignal und das Mobilfunksignal zeitgleich über die Antennenstruktur geführt werden kann können und dennoch eine Unterscheidung oder Trennung zwischen Radarsignal und Mobilfunksignal anhand der Polarität möglich ist. So kann beispielsweise eine Trennung von Mobilfunksignal und Radarsignal in der Antennenstruktur durchgeführt sein.

In einer Ausführungsform wird die HF-Frontendeinheit dazu eingerichtet, die elektromagnetischen Wellen des Radarsignals einerseits und die elektromagnetischen Wellen des jeweiligen Mobilfunksignals andererseits über dieselbe Antennenstruktur zu führen und hierbei das Radarsignal und das jeweilige Mobilfunksignal mittels eines Zeitmultiplexverfahrens (Zeitschlitzverfahrens) und/oder mittels eines Frequenzmultiplexverfahrens (unterschiedliche, disjunkte Frequenzintervalle für Radarsignal und Mobilfunksignal) getrennt zu halten. Die HF-Frontendeinheit ist also mit der Antennenstruktur verbunden und betreibt also die einzelne Antennenstruktur, um sowohl für das Radarsignal als auch das jeweilige Mobilfunksignal senden und/oder empfangen zu können. Um hierbei zwischen Radarsignal und Mobilfunksignal zu unterscheiden, wird die Antennenstruktur im Zeitmultiplexverfahren jeweils nur für eines der Signale (Radarsignal oder Mobilfunksignal) genutzt. Es wird abwechselnd zwischen Radarsignal und Mobilfunksignal umgeschaltet. Im Zeitschlitzverfahren erfolgt die Nutzung in unterschiedlichen, disjunkten Zeitintervallen. Eine sogar gleichzeitige Verwendung der Antennenstruktur für Radarsignal und Mobilfunksignal kann durch das Frequenzmultiplexverfahren erreicht werden.

In einer Ausführungsform ist die HF-Frontendeinheit dazu ausgerichtet, das Radarsignal und das Mobilfunksignal, das zeitgleich über die gleiche Antennenstruktur empfangen wird, aber auf einer unterschiedlichen Frequenz liegt, mithilfe eines Bandfilters in ein Mobilfunksignal und ein Radarsignal aufzuteilen und getrennt bereitzustellen und/oder zu verarbeiten.

In einer Ausführungsform ist die HF-Frontendeinheit dazu eingerichtet, das Radarsignal und das jeweilige Mobilfunksignal mittels desselben Ausgangsverstärkers und/oder desselben Eingangsverstärkers in einem Zeitmultiplexverfahren und/oder einem Frequenzmultiplexverfahren zu verstärken und/oder mittels desselben Mischers zu mischen. Mittels des Mischens kann das Radarsignal und das Mobilfunksignal jeweils zwischen dem Sendefrequenzband (mit der Mittenfrequenz für die elektromagnetischen Wellen) und dem Basisband (Frequenzbereich mit dem Gleichanteil gemischt oder übertragen werden. Falls für einen Eingangsverstärker und/oder Ausgangsverstärker dessen Arbeitsfrequenzbereich breit genug ist, kann sowohl das Frequenzband des Radarsignals und davon getrennt das Frequenzband eines Mobilfunksignals zeitgleich verstärkt werden. Bei einem Mischer ist insbesondere das Zeitmultiplexverfahren vorteilhaft.

In einer Ausführungsform wird ausgenutzt, dass mit einem Antennenarray die Ausrichtung der Hauptkeule oder des Hauptbeams adaptiv ist oder zeitlich veränderbar ist. Dies kann innerhalb des Antennenarrays mittels einer analogen Schaltung durch Verändern der relativen Phasen zwischen den Subantennen erreicht werden oder indem durch die Recheneinrichtung für jede Subantenne das Mobilfunksignal und/oder das Radarsignal individuell verarbeitet wird, um für jede Subantenne einen eigenen Phasenversatz einzustellen. Die Recheneinrichtung ist bei dieser Ausführungsform dazu eingerichtet, mittels des Beamformings den Beam des Radarsignals, also die Hauptkeule oder den Hauptbeam, gemäß eines vorbestimmten Abtastungsmusters zum Abtasten der Umgebung der Sende-Empfangsvorrichtung zu verschwenken. Das Abtastungsmuster kann beispielsweise eine zeilenweise und/oder spaltenweise Abtastung oder ein zeilenweises und/oder spaltenweises Überstreichen der Umgebung mit dem Beam vorsehen. Hierdurch kann mittels des Radarsignals eine räumliche Auflösung des Radarbilds oder der Radarabtastung realisiert werden.

In einer Ausführungsform ist die Recheneinrichtung dazu eingerichtet, an dem Radarsignal eine Echounterdrückung der Mobilfunkfunktionalität anzuwenden. Eine solche Echounterdrückung ist ein aus dem Stand der Technik bekannter Algorithmus, um ein Echo, wie es beim Echoempfang durch Überlagerung der über den direkten Empfangsweg empfangenen elektromagnetischen Welle und einer Reflexion derselben elektromagnetischen Welle, wie es beispielsweise durch eine Reflexion an einem Gebäude verursacht werden kann, in dem empfangenen Mobilfunksignal zu kompensieren. Einen solchen Algorithmus zur Echounterdrückung kann man bei einer gemeinsamen Nutzung der Recheneinrichtung auch auf das Radarsignal anwenden. Hierdurch wird beispielsweise eine Bodenreflexion in dem Radarsignal kompensiert.

In einer Ausführungsform ist die Recheneinrichtung dazu eingerichtet, das Radarsignal mit einer fahrzeugspezifischen Signatur zu signieren. Mit anderen Worten kann an einem Radarecho anhand der Signatur erkannt werden, ob es sich um ein Radarsignal der Sende-Empfangsvorrichtung handelt oder um ein Radarsignal einer anderen, in der Nähe angeordneten Sende-Empfangsvorrichtung. Hierdurch können sich beispielsweise dann zwei Kraftfahrzeuge nicht durch ihre Radarsignale gegenseitige bei der Ortung stören. Die Signatur ist hierbei insbesondere mittels eines orthogonalen Codes der Mobilfunkfunktionalität realisiert. Ein solcher orthogonaler Code kann beispielsweise auf einem Goldcode beruhen.

Die Erfindung umfasst auch ein Kraftfahrzeug mit zumindest einer Sende-Empfangsvorrichtung gemäß der Erfindung. Die Sende-Empfangsvorrichtung kann beispielsweise eine Antennenstruktur vorsehen, die in einem Front-Stoßfänger oder Heck-Stoßfänger oder an einer Fahrzeugseite, zum Beispiel in den Seitenspiegeln, angeordnet ist. Es kann auch eine Antennenstruktur auf einem Dach des Kraftfahrzeugs vorgesehen sein, da, wie bereits beschrieben, mittels eines Beamformings ein Beam für die Radarfunktionalität in einer horizontalen Ebene 360 Grad um das Kraftfahrzeug verschwenkt werden kann, während für die Mobilfunkfunktionalität ein Beam hin zu einer Mobilfunkstation ausgerichtet werden kann.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung einer Ausführungsform des erfindungsgemäßen Kraftfahrzeugs mit einer Sende-Empfangsvorrichtung gemäß der Erfindung; und
- Fig. 2: eine schematische Darstellung einer Ausgestaltung einer HF-Frontendeinheit für eine Ausführungsform der erfindungsgemäßen Sende-Empfangsvorrichtung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar,

welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

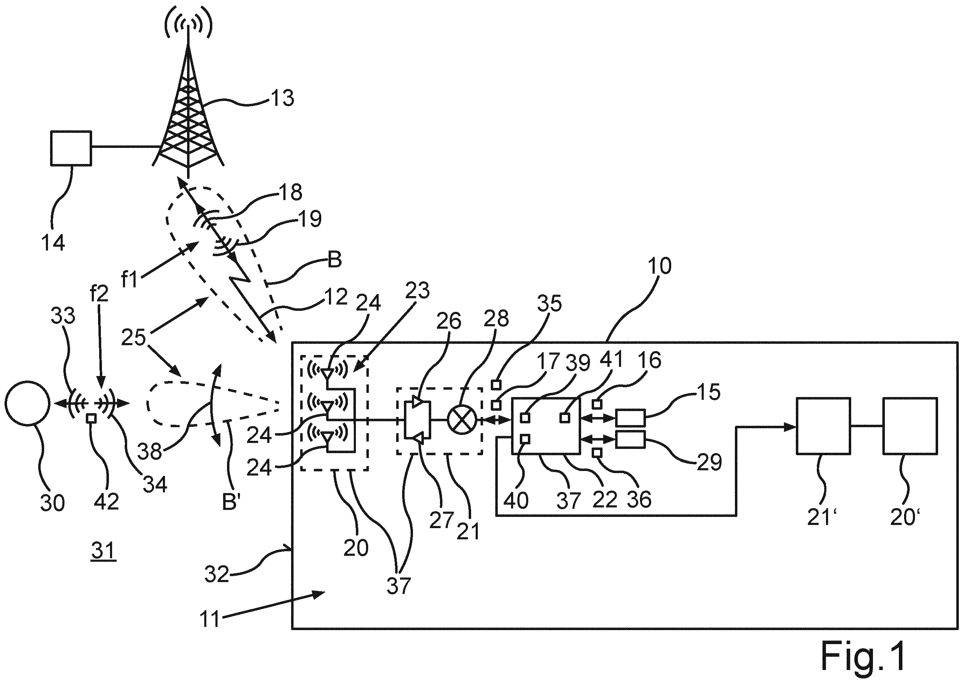

Die Fig. 1 zeigt ein Kraftfahrzeug 10, bei dem es sich um einen Kraftwagen, insbesondere einen Personenkraftwagen oder Lastkraftwagen, oder einen Personenbus handeln kann. Das Kraftfahrzeug 10 kann eine Sende-Empfangsvorrichtung 11 aufweisen, die dazu eingerichtet sein kann, eine Mobilfunkverbindung 12 zwischen dem Kraftfahrzeug 10 und einer Basisstation 13 eines Mobilfunknetzes 14 zu betreiben. Hierdurch kann eine Mobilfunkanwendung 15 in dem Kraftfahrzeug 10 bereitgestellt werden, beispielsweise Mobilfunktelefonie und/oder Datenübertragung für beispielsweise eine Internetverbindung. Hierdurch kann das Senden und/oder Empfangen von Kommunikationsdaten 16 für die Mobilfunkanwendung 15 über die Mobilfunkverbindung 12 hin zum Mobilfunknetz 14 erfolgen. Die Kommunikationsdaten 16 können hierbei zu einem Mobilfunksignal 17 umgewandelt werden (Senden) oder aus dem Mobilfunksignal 17 können die Kommunikationsdaten 16 extrahiert werden (Empfangen) und mittels der Sende-Empfangsvorrichtung 11 kann dann das Mobilfunksignal 17 als elektromagnetische Welle 18 ausgesendet werden und/oder es kann eine elektromagnetische Welle 19 empfangen werden, die ein Mobilfunksignal 17 enthält. Die Sende-Empfangsvorrichtung 11 kann hierfür eine oder mehrere Antennenstrukturen 20, 20' die an verschiedenen Stellen des Kraftfahrzeuges verortet sein können, eine oder mehrere HF-Frontendeinheiten 21, 21' und eine Recheneinrichtung 22 aufweisen.

Die Antennenstruktur 20 kann zum Empfangen der elektromagnetischen Welle 19 und/oder zum Erzeugen der elektromagnetischen Welle 18 vorgesehen sein. Die Antennenstruktur 20 kann ein Antennenarray 23 mit Subantennen 24 aufweisen. Mittels des Antennenarrays 23 kann ein Beamforming 25 vorgesehen sein, mittels welchem ein Beam oder eine Hauptkeule B für die Mobilfunkverbindung 12 ausgebildet oder bereitgestellt werden kann. Die Antennenstruktur 20 kann mit der Recheneinrichtung 22 über die HF-Frontendeinheit 21 gekoppelt sein. Die HF-Frontendeinheit 21 kann einen Eingangsverstärker 26 für empfangene Mobilfunksignale 17 und einen Ausgangsverstärker 27 für zu sendende Mobilfunksignale 17 aufweisen. Die HF-Frontendeinheit 21 kann einen Mischer 28 aufweisen, um zwischen einem Sendefrequenzbereich/Empfangsfrequenzbereich einerseits (Hochfrequenz) und einem Basisband zu wandeln. Dem Basisband kann durch die Recheneinrichtung 22 zwischen dem Mobilfunksignal 17 und den Kommunikationsdaten 16 gewandelt werden. Beispielsweise kann durch die Recheneinrichtung 22 ein Mobilfunkprotokoll, beispielsweise ein Protokollstack, realisiert sein. Die Recheneinrichtung 22 kann beispielsweise auf zumindest einem digitalen Signalprozessor und/oder zumindest einem Mikroprozessor beruhen.

Mit der Recheneinrichtung 22 kann zumindest eine weitere HF-Frontendeinheit 21' mit daran gekoppelter Antennenstruktur 20' angeschlossen sein.

Bei dem Kraftfahrzeug 10 kann des Weiteren eine Radaranwendung oder Radaranwendung 29 bereitgestellt sein, die eine Ortung zumindest eines Objekts 30 in einer Umgebung 31 des Kraftfahrzeugs 10 realisieren kann. In der Fig. 1 ist gezeigt, wie die Ortung des Objekts 30 beispielsweise im Bereich einer Front 32 des Kraftfahrzeugs z10 durchgeführt werden kann. Die Radaranwendung 29 kann beispielsweise Bestandteil einer autonomen Fahrfunktion sein.

Die Sende-Empfangsvorrichtung 11 kann für die Radaranwendung 29 eine Radarfunktionalität bereitstellen, das heißt es kann eine elektromagnetische Welle 33 eines Radarsignals ausgesendet werden, die an dem Objekt 30 reflektiert werden kann. Das durch die Reflexion entstehende Echo 34, das heißt die reflektierte elektromagnetische Welle, kann dann durch die Sende-Empfangsvorrichtung 11 empfangen werden und hieraus ein Radarsignal 35 erzeugt werden, auf dessen Grundlage Objektdaten 36 zum Beschreiben des zumindest einen georteten Objekts 30 an die Radaranwendung 29 bereitgestellt werden kann.

Bei der Sende-Empfangsvorrichtung 11 stellen die Antennenstruktur 20, die HF-Frontendeinheit 21 und die Recheneinrichtung 22 jeweils eine Komponente 37 der Sende-Empfangsvorrichtung 11 dar. Mindestens eine der Komponenten 37, bevorzugt zwei, insbesondere alle der Komponenten 37, werden in dem Kraftfahrzeug 10 hierbei sowohl für die Verarbeitung des Mobilfunksignals 17 als auch des Radarsignals 35 genutzt.

So kann mittels der Antennenstruktur 20 auch die elektromagnetische Welle 33 erzeugt und das Echo 34 empfangen werden. Hierzu kann vorgesehen sein, dass eine Mittenfrequenz f1 für die Mobilfunkverbindung 12 und eine Frequenz f2 für die elektromagnetischen Wellen des Radarsignals (elektromagnetische Welle 33 und Echo 34) sich in Bezug auf die Mittenfrequenz f1 für die Mobilfunkverbindung 12 um höchstens den Faktor 5 unterscheiden. Insbesondere ist ein Unterschied von weniger als Faktor 3, insbesondere weniger als Faktor 2, bevorzugt.

Somit kann die Antennenstruktur 20 auch zum Erzeugen der elektromagnetischen Welle 33 genutzt werden. Insbesondere kann mittels des Beamformings auch ein Beam B' erzeugt werden, also eine Hauptkeule, die in die Umgebung 31 ausgerichtet werden kann, um ein Objekt 30 zu orten. Insbesondere kann auch ein Verschwenken 38 des Beams B' vorgesehen sein, um eine Ortsauflösung der Ortung zu erreichen.

Auch die HF-Frontendeinheit 21 kann zum Verstärken und/oder Mischen des Radarsignals 35 genutzt werden. Durch die Recheneinrichtung 22 kann sowohl für das Mobilfunksignal 17 als auch für das Radarsignal 35 eine digitale Signalverarbeitung vorgesehen sein, beispielsweise das Beamforming 39, eine Echounterdrückung 40 und/oder eine Hindernisortung 41.

Im Kraftfahrzeug 10 ergibt sich somit durch die Sende-Empfangsvorrichtung 11 eine gemeinsame Nutzung zumindest eines Antennenarrays 23 für Mobilfunk und Radar. So können Mobilfunkfunktionalität und Radarfunktionalität Front-/Heck-/Seitenantennen des Kraftfahrzeugs 10 gemeinsam nutzen. Eine Unterscheidung der Signale für Mobilfunk/Radar (Mobilfunksignal/Radarsignal 35) kann zum Beispiel durch unterschiedliche Polarisation für Mobilfunk/Radar (zum Beispiel horizontal und vertikal) und/oder durch unterschiedliche Zeitschlitze für Mobilfunk und Radar und/oder durch Bandfilter erreicht werden. Auch eine gemeinsame Nutzung der HF-Frontendeinrichtung für Mobilfunk und Radar ist möglich, so kann eine gemeinsame Nutzung des gleichen Ausgangs- und Eingangsverstärkers 26, 27 für Mobilfunk und Radar beispielsweise durch ein Zeitschlitzverfahren vorgesehen sein oder es kann für das Radarsignal ein zusätzlicher Verstärker zusätzlich zu einem Low-/Mid-/High-Verstärker für das Mobilfunksignal vorgesehen sein. Ein Anschluss mehrerer HF-Frontendeinheiten für Radar und Mobilfunk an eine gemeinsame Recheneinrichtung 22 kann ebenfalls vorgesehen sein. So kann zum Beispiel ein Front-/Heck- und Seiten-/HF-Sendeeinheit an eine zentrale Recheneinrichtung 22, die beispielsweise auf zumindest einem DSP beruhen kann, angeschlossen sein.

In der Recheneinrichtung können das Mobilfunksignal und das Radarsignal gleichzeitig oder zeitversetzt ausgewertet werden, indem beispielsweise ein DSP oder ASIC (Application Specific Integrated Circuit) aus dem Mobilfunkbereich auch für das Radarsignal 35 genutzt wird. Denn bei der Mobilfunkfunktionalität werden Technologien wie beispielsweise die Echounterdrückung 40 verwendet, die nun auch vorteilhaft für das Radarsignal 35 bereitgestellt werden kann.

Durch die Verwendung des adaptiven Beamformings oder des Verschwenkens 38 kann eine höhere Auflösung der Radarfunktionalität erreicht werden. So kann beispielsweise ein 8x8-Beamforming realisiert werden. Es kann eine zeilenweise Abtastung der Umgebung 31 und eine Auswertung der Echos 34 erfolgen.

Somit ergibt sich durch Nutzung der Technologien aus dem Mobilfunkbereich für das Radarsignal 35 eine höhere Störsicherheit der Radarfunktionalität. Zudem kann die höhere Störsicherheit auch durch eine Modulation des Radarsignals zum Aufprägen einer Signatur 42 genutzt werden. Somit kann bei einem Empfang des Echos 34 unterschieden werden, ob es sich um ein Echo 34 zu dem Radarsignal 35 oder der elektromagnetischen Welle 33 handelt oder um ein Echo eines fremden Fahrzeugs. Dies kann beispielsweise erreicht werden, indem die elektromagnetische Welle 33 als eindeutiges Ausgangssignal unter Verwendung eines orthogonalen Codes für das Radarsignal 35 erzeugt wird.

Es ist insbesondere vorgesehen, dass die Antennenstruktur als eine einzelne Antenne wirkt, also keine zwei unabhängig voneinander betreibbaren Antennen aufweist. Dabei kann aber die beschriebene Einteilung und Subantennen vorgesehen sein, wobei alle einzelnen Subantennen der Antennenstruktur 20 separat angesteuert werden können, z.B. für 4x4-MiMo (Multiple-Input-Multiple-Output) oder das Beamforming.

Die orthogonalen Codes können also auch für das Mobilfunksignal 17 vorgesehen sein.

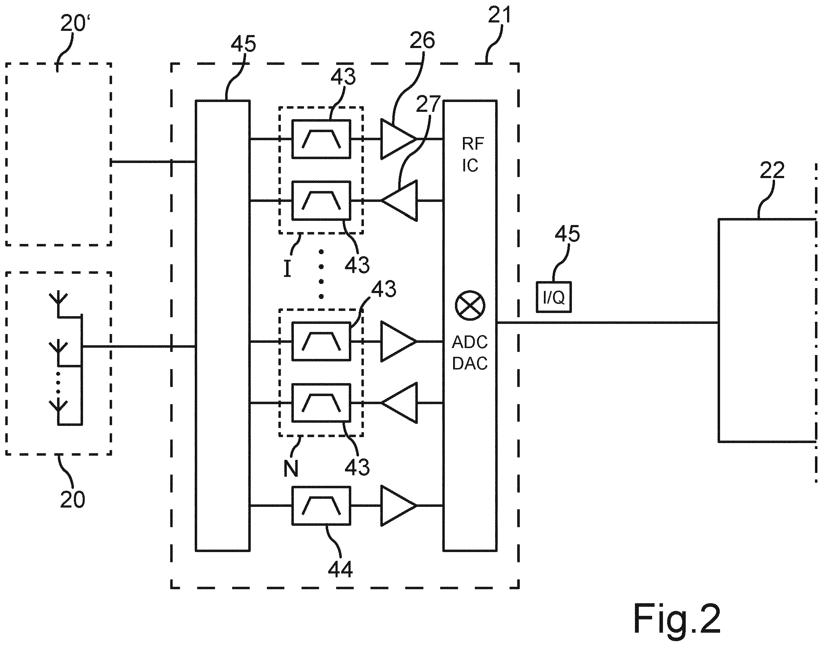

Fig. 2. zeigt eine mögliche Ausgestaltung der HF-Frontendeinheit 21, die folgende Elemente aufweisen kann:
- mehrere Eingangsverstärker 26 und Ausgangsverstärker 27 mit jeweils eigenem Bandpassfilter 43 für Mobilfunkbänder oder Radarbänder (Dargestellt sind mehrere Filterpaare I bis N, die jeweils für ein Frequenzband einen Sendekanal über einen Ausgangsverstärker 27 und einen Empfangskanal über einen Eingangsverstärker 26 bereitstellen. N ist die Gesamtanzahl an Filterpaaren. Es ergeben sich N unterschiedliche Frequenzbänder);
- ein Bandpassfilter 44 für das Radar-Echo 34;
- einen Multiplexer 45 zum Schalten der elektrischen Signale aus der Antennenstruktur 20 auf verschiedene Mobilfunk- oder Radarbänder und/oder in die Antennenstruktur 20;
- einen integrierten Schaltkreis RF-IC (beispielsweise mit zumindest einem Mischer und/oder Analog-Digital-Wandlern ADCs und Digital-Analog-Wandlern DACs).

Somit können für die Recheneinrichtung 22 bereits digitale/gesampelte I/Q-Daten (45) zur Verfügung werden, die das Mobilfunksignal 17 und das Radarsignal 35 enthalten können. Es kann aber auch ein analoges Interface zur Recheneinrichtung 22 verwendet werden.

An eine Recheneinrichtung 22 können ein oder mehrere HF-Frontendeinheiten 21 angeschlossen werden. An eine HF Frontendeinheit können wiederum mehrere Antennenstrukturen 20, 20' angeschlossen werden.

Insgesamt zeigen die Beispiele, wie durch die Erfindung eine Verschmelzung von Mobilfunk und Radar durchgeführt werden kann.

## Patentansprüche

1. Sende-Empfangsvorrichtung (11) für ein Kraftfahrzeug (10), wobei die Sende-Empfangsvorrichtung (11) für eine Mobilfunkfunktionalität als Komponenten (37) aufweist:
- eine Antennenstruktur (20) zum Erzeugen elektromagnetischer Wellen (18) eines zu sendenden Mobilfunksignals (17) und/oder zum Empfangen elektromagnetischer Wellen (19) eines empfangenen Mobilfunksignals (17),
- eine mit der Antennenstruktur (20) gekoppelte HF-Frontendeinheit (21) zum Aufwärtsmischen des zu sendenden Mobilfunksignals (17) und/oder zum Abwärtsmischen des empfangenen Mobilfunksignals (17) und
- eine mit der HF-Frontendeinheit (21) gekoppelte Recheneinrichtung (22) zum Umwandeln zwischen dem jeweiligen Mobilfunksignal (17) und in dem Mobilfunksignal (17) übertragenen Kommunikationsdaten (16),
**dadurch gekennzeichnet, dass**
die Sende-Empfangsvorrichtung (11) dazu eingerichtet ist, mittels einer oder einigen oder jeder der Komponenten (37) zusätzlich ein Radarsignal (35) zu verarbeiten, wobei für das Radarsignal (35) elektromagnetische Wellen (33) mit Frequenzen (f2) vorgesehen sind, die sich von einer Mittenfrequenz (f1) der elektromagnetischen Wellen (18, 19) des jeweiligen Mobilfunksignals (17) um weniger als den Faktor 5 unterscheiden, wobei die Antennenstruktur (20) als ein Antennenarray (23) ausgestaltet ist und die Recheneinrichtung (22) dazu eingerichtet ist, eine jeweilige maximale Richtungssensitivität des Antennenarrays (23) für die elektromagnetischen Wellen (33) des Radarsignals (35) einerseits und für die elektromagnetischen Wellen (18, 19) des jeweiligen Mobilfunksignals (17) andererseits mittels eines Beamformings (39) in unterschiedliche Richtungen auszurichten und zum Senden und/oder Empfangen des Mobilfunksignals (17) mittels einer Ortungseinheit eine Hindernisortung (41) für ein Nullsteering des Beamformings (39) durchzuführen und mittels derselben Ortungseinheit eine Objektortung anhand des Radarsignals (35) durchzuführen, wobei ein Algorithmus für das Nullsteering des Beamformings aus der Mobilfunkfunktionalität dafür genutzt wird, das Radarsignal zu verarbeiten, um erkannte Hindernisse als Objekte in der Umgebung des Kraftfahrzeugs kenntlich zu machen, indem eine inverse Verarbeitung für ein Hindernis, das bei der Mobilfunkfunktionalität für ein Nullsteering des Beamformings vorgesehen ist, mittels derselben Ortungseinheit eine Objektortung anhand des Radarsignals vorsieht, sodass ein Algorithmus für ein Nullsteering des Beamformings aus der Mobilfunkfunktionalität dafür genutzt ist, ein Radarsignal zu verarbeiten, um die erkannten Hindernisse als Objekte in der Umgebung des Kraftfahrzeugs kenntlich zu machen.

2. Sende-Empfangsvorrichtung (11) nach Anspruch 1, wobei die Antennenstruktur (20) dazu eingerichtet ist, die elektromagnetischen Wellen (33) des Radarsignals (35) einerseits und die elektromagnetischen Wellen (18, 19) des jeweiligen Mobilfunksignals (17) andererseits mit unterschiedlichen Polaritäten und/oder Frequenzen zu erzeugen und/oder zu empfangen.

3. Sende-Empfangsvorrichtung (11) nach einem der vorhergehenden Ansprüche, wobei die HF-Frontendeinheit (21) dazu eingerichtet ist, die elektromagnetischen Wellen (33) des Radarsignals (35) einerseits und die elektromagnetischen Wellen (18, 19) des jeweiligen Mobilfunksignals (17) andererseits über dieselbe Antennenstruktur (20) zu führen und hierbei das Radarsignal (35) und das jeweilige Mobilfunksignal (17) mittels eines Zeitmultiplexverfahrens und/oder eines Frequenzmultiplexverfahrens getrennt zu halten.

4. Sende-Empfangsvorrichtung (11) nach einem der vorhergehenden Ansprüche, wobei die HF-Frontendeinheit (21) dazu ausgerichtet ist, das Radarsignal (35) und das Mobilfunksignal (17), die zeitgleich über die gleiche Antennenstruktur (20) empfangen werden, aber jeweils auf einer unterschiedlichen Frequenz liegen, mithilfe eines jeweiligen Bandfilters (43, 44) in das Mobilfunksignal (17) und das Radarsignal (35) aufzuteilen und getrennt bereitzustellen und/oder zu verarbeiten.

5. Sende-Empfangsvorrichtung (11) nach einem der vorhergehenden Ansprüche, wobei die HF-Frontendeinheit (21) dazu eingerichtet ist, das Radarsignal (35) und das jeweilige Mobilfunksignal (17) mittels desselben Ausgangsverstärkers (27) und/oder desselben Eingangsverstärkers (26) in einem Zeitmultiplexverfahren und/oder einem Frequenzmultiplexverfahren zu verstärken und/oder mittels desselben Mischers (28) zu mischen.

6. Sende-Empfangsvorrichtung (11) nach einem der vorhergehenden Ansprüche, wobei die Recheneinrichtung (22) dazu eingerichtet ist, mittels des Beamformings (39) einen Beam (B') des Radarsignals (35) gemäß einem vorbestimmten Abtastungsmuster zum Abtasten einer Umgebung (31) der Sende-Empfangsvorrichtung (11) zu verschwenken (38).

7. Sende-Empfangsvorrichtung (11) nach einem der vorhergehenden Ansprüche, wobei die Recheneinrichtung (22) dazu eingerichtet ist, an dem Radarsignal (35) eine Echounterdrückung (40) der Mobilfunkfunktionalität anzuwenden.

8. Sende-Empfangsvorrichtung (11) nach einem der vorhergehenden Ansprüche, wobei die Recheneinrichtung (22) dazu eingerichtet ist, das Radarsignal (35) mit einer fahrzeugspezifischen Signatur (42) zu signieren, wobei die Signatur (42) auf einem orthogonalen Code der Mobilfunkfunktionalität beruht.

9. Kraftfahrzeug (10) mit zumindest einer Sende-Empfangsvorrichtung (11) nach einem der vorhergehenden Ansprüche.

## Claims

1. Transmitting/receiving device (11) for a motor vehicle (10), whereby for a mobile radio functionality the transmitting/receiving device (11) has, as components (37):
- an antenna structure (20) for generating electromagnetic waves (18) of a mobile radio signal (17) to be transmitted and/or for receiving electromagnetic waves (19) of a received mobile radio signal (17),
- an HF front-end unit (21) coupled to the antenna structure (20) for upward mixing of the mobile radio signal (17) to be transmitted and/or for downward mixing of the received mobile radio signal (17) and
- a computing apparatus (22) coupled to the HF front-end unit (21) for converting between the respective mobile radio signal (17) and communication data (16) transmitted in the mobile radio signal (17),
**characterised in that**
the transmitting/receiving device (11) is set up to additionally process a radar signal (35) by means of one or some or each of the components (37), whereby for the radar signal (35), electromagnetic waves (33) are provided with frequencies (f2) that differ by less than a factor of 5 from a centre frequency (f1) of the electromagnetic waves (18, 19) of the respective mobile radio signal (17), whereby the antenna structure (20) is designed as an antenna array (23) and the computing apparatus (22) is set up to orient a respective maximum directional sensitivity of the antenna array (23) for the electromagnetic waves (33) of the radar signal (35) on the one hand, and for the electromagnetic waves (18, 19) of the respective mobile radio signal (17) on the other hand, by means of beamforming (39) in different directions, and for transmitting and/or receiving the mobile radio signal (17) by means of a location apparatus to carry out an obstacle location (41) for null steering of the beamforming (39) and to carry out an object location by means of the same location apparatus using the radar signal (35), whereby an algorithm for the null steering of the beamforming from the mobile radio functionality is used to process the radar signal in order to make recognised obstacles in the surroundings of the motor vehicle identifiable as objects, whereby, by means of the same location apparatus, inverted processing for an obstacle which is provided in the mobile radio functionality for null steering of the beamforming provides object location by means of the radar signal, so that an algorithm for null steering of the beamforming from the mobile radio functionality is used to process a radar signal in order to make the recognised obstacles identifiable as objects in the surroundings of the motor vehicle.

2. Transmitting/receiving device (11) according to claim 1, whereby the antenna structure (20) is set up to generate and/or to receive the electromagnetic waves (33) of the radar signal (35) on the one hand, and the electromagnetic waves (18, 19) of the respective mobile radio signal (17) on the other hand, with different polarities and/or frequencies.

3. Transmitting/receiving device (11) according to any of the preceding claims, whereby the HF front-end unit (21) is set up to guide the electromagnetic waves (33) of the radar signal (35) on the one hand, and the electromagnetic waves (18, 19) of the respective mobile radio signal (17) on the other hand, via the same antenna structure (20) and thereby to keep the radar signal (35) and the respective mobile radio signal (17) separate by means of a time-division multiplexing process and/or a frequency-division multiplexing process.

4. Transmitting/receiving device (11) according to any of the preceding claims, whereby the HF front-end unit (21) is oriented so that the radar signal (35) and the mobile radio signal (17), which are received at the same time via the same antenna structure (20), but each have a different frequency, are divided by means of a respective band filter (43, 44) into the mobile radio signal (17) and the radar signal (35) and are provided and/or processed separately.

5. Transmitting/receiving device (11) according to any of the preceding claims, whereby the HF front-end unit (21) is set up to amplify the radar signal (35) and the respective mobile radio signal (17) separate by means of the same output amplifier (27) and/or the same input amplifier (26) in a time-division multiplexing process and/or a frequency-division multiplexing process and/or to mix them by means of the same mixer (28).

6. Transmitting/receiving device (11) according to any of the preceding claims, whereby the computing apparatus (22) is set up to pivot (38) a beam (B') of the radar signal (35) by means of the beamforming (39) according to a predetermined scanning pattern for scanning the surroundings (31) of the transmitting/receiving device (11).

7. Transmitting/receiving device (11) according to any of the preceding claims, whereby the computing apparatus (22) is set up to apply an echo suppression (40) of the mobile radio functionality to the radar signal (35).

8. Transmitting/receiving device (11) according to any of the preceding claims, whereby the computing apparatus (22) is set up to sign the radar signal (35) with a vehicle-specific signature (42), whereby the signature (42) is based on an orthogonal code of the mobile radio functionality.

9. Motor vehicle (10) with at least one transmitting/receiving device (11) according to any of the preceding claims.

## Revendications

1. Dispositif d'émission et de réception (11) pour un véhicule automobile (10), dans lequel le dispositif d'émission et de réception (11) présente pour une fonctionnalité de téléphonie mobile comme composants (37) :
- une structure d'antenne (20) pour la génération d'ondes électromagnétiques (18) d'un signal de téléphonie mobile (17) à envoyer et/ou pour la réception d'ondes électromagnétiques (19) d'un signal de téléphonie mobile (17) reçu,
- une unité d'extrémité avant HF (21) couplée à la structure d'antenne (20) pour l'élévation de fréquence du signal de téléphonie mobile (17) à envoyer et/ou pour le l'abaissement de fréquence du signal de téléphonie mobile (17) reçu et
- un dispositif de calcul (22) couplé à l'unité d'extrémité avant HF (21) pour la conversion de données de communication (16) transmises entre le signal de téléphonie mobile (17) respectif et dans le signal de téléphonie mobile (17),
**caractérisé en ce que**
le dispositif d'émission et de réception (11) est conçu afin de traiter au moyen d'un ou de certains ou de chacun des composants (37) en outre un signal radar (35), dans lequel pour le signal radar (35), des ondes électromagnétiques (33) sont prévues avec des fréquences (f2) qui se distinguent d'une fréquence médiane (f1) des ondes électromagnétiques (18, 19) du signal de téléphonie mobile (17) respectif de moins du facteur 5, dans lequel la structure d'antenne (20) est configurée comme un agencement d'antenne (23) et le dispositif de calcul (22) est conçu afin d'orienter une sensitivité de direction maximale respective de l'agencement d'antenne (23) pour les ondes électromagnétiques (33) du signal radar (35) d'une part et pour les ondes électromagnétiques (18, 19) du signal de téléphonie mobile (17) respectif d'autre part au moyen d'un formage de faisceau (39) dans différentes directions et de réaliser pour l'envoi et/ou la réception du signal de téléphonie mobile (17) au moyen d'une unité de localisation une localisation d'obstacle (41) pour une non-orientation du formage de faisceau (39) et de réaliser au moyen de la même unité de localisation une localisation d'objet à l'aide du signal radar (35), dans lequel un algorithme pour la non-orientation du formage de faisceau est utilisé à partir de la fonctionnalité de téléphonie mobile afin de traiter le signal radar pour marquer des obstacles reconnus comme objets dans l'environnement du véhicule automobile **en ce qu'**un traitement inverse pour un obstacle qui est prévu pour la fonctionnalité de téléphonie mobile pour une non-orientation du formage de faisceau, au moyen de la même unité de localisation prévoit une localisation d'objet à l'aide du signal radar de sorte qu'un algorithme pour une non-orientation du formage de faisceau soit utilisé à partir de la fonctionnalité de téléphonie mobile afin de traiter un signal radar pour marquer les obstacles reconnus comme objets dans l'environnement du véhicule automobile.

2. Dispositif d'émission et de réception (11) selon la revendication 1, dans lequel la structure d'antenne (20) est conçue afin de générer et/ou de recevoir les ondes électromagnétiques (33) du signal radar (35) d'une part et les ondes électromagnétiques (18, 19) du signal de téléphonie mobile (17) respectif d'autre part avec différentes polarités et/ou fréquences.

3. Dispositif d'émission et de réception (11) selon l'une quelconque des revendications précédentes, dans lequel l'unité d'extrémité avant HF (21) est conçue afin de guider les ondes électromagnétiques (33) du signal radar (35) d'une part et les ondes électromagnétiques (18, 19) du signal de téléphonie mobile (17) respectif d'autre part par le biais de la même structure d'antenne (20) et ainsi de maintenir séparés le signal radar (35) et le signal de téléphonie mobile (17) respectif au moyen d'un procédé de multiplexage temporel et/ou d'un procédé de multiplexage de fréquence.

4. Dispositif d'émission et de réception (11) selon l'une quelconque des revendications précédentes, dans lequel l'unité d'extrémité avant HF (21) est orientée afin de répartir et mettre à disposition et/ou traiter séparément le signal radar (35) et le signal radar mobile (17) qui sont reçus en même temps par le biais de la même structure d'antenne (20) mais se trouvent respectivement sur une fréquence différente, à l'aide d'un filtre de bande (43, 44) respectif dans le signal de téléphonie mobile (17) et le signal radar (35).

5. Dispositif d'émission et de réception (11) selon l'une quelconque des revendications précédentes, dans lequel l'unité d'extrémité avant HF (21) est conçue afin d'amplifier le signal radar (35) et le signal de téléphonie mobile (17) respectif au moyen du même amplificateur de sortie (27) et/ou du même amplificateur d'entrée (26) dans un procédé de multiplexage temporel et/ou un procédé de multiplexage de fréquence et/ou de les mélanger au moyen du même mélangeur (28).

6. Dispositif d'émission et de réception (11) selon l'une quelconque des revendications précédentes, dans lequel le dispositif de calcul (22) est conçu afin de pivoter au moyen du formage de faisceau (39) un faisceau (B') du signal radar (35) selon un modèle d'échantillonnage prédéterminé pour l'échantillonnage d'un environnement (31) du dispositif d'émission et de réception (11).

7. Dispositif d'émission et de réception (11) selon l'une quelconque des revendications précédentes, dans lequel le dispositif de calcul (22) est conçu afin d'appliquer au signal radar (35) une suppression d'écho (40) de la fonctionnalité de téléphonie mobile.

8. Dispositif d'émission et de réception (11) selon l'une quelconque des revendications précédentes, dans lequel le dispositif de calcul (22) est conçu afin de signer le signal radar (35) avec une signature (42) spécifique au véhicule, dans lequel la signature (42) repose sur un code orthogonal de la fonctionnalité de téléphonie mobile.

9. Véhicule automobile (10) avec au moins un dispositif d'émission et de réception (11) selon l'une quelconque des revendications précédentes.
